# EUROPEAN PATENT SPECIFICATION

(11) **EP 1 566 308 B1**
(45) Date of publication and mention of the grant of the patent: **08.03.2017**
(21) Application number: 05250735.7
(22) Date of filing: 09.02.2005
(51) Int. Cl.: B60Q 1/48

(54) **Driver assistance system**
Fahrassistenzsystem
Système d'assistance au conducteur

(30) Priority: 23.02.2004 GB 0403940
(43) Date of publication of application: 24.08.2005
(73) Proprietor: Jaguar Land Rover Limited, Whitley Coventry CV3 4LF (GB)
(72) Inventor: Greenwood, Jeremy John, West Midlands, B73 5LL (GB); Nicholls, Stephen Paul, Oxfordshire, OX8 8BE (GB); Zoepf, Stephen M., Dearborn, 48124 (US)
(74) Representative: Holmes, Matthew William

(56) References cited:
- EP-A- 1 288 071
- WO-A-02/071787
- US-A- 5 375 123
- US-A1- 2003 156 556
- US-B1- 6 452 182

## Description

The present invention relates to a driver assistance system for aiding driver vision in a vehicle, particularly but not exclusively in an off-road or manoeuvring situation.

It is known for example from JP11298887 to provide a video camera connected to a monitor through a radio channel and which is removable from the vehicle, held by a hand or removeably fixed to a vehicle body to give a view of a part of the vehicle body which cannot be directly observed by driver's eyes.

It is also known from US6542182 to provide a system including a self-powered, mobile camera unit for displaying an area outside a normal viewing area to a vehicle driver.

However, it is a problem with such known video camera that a user may not receive an image if another vehicle having a similar video camera is close by and on the same channel. In addition, such a video camera is prone to interference by the fact that the band of the radio channel is used by many other users.

It is also known for security systems to use a microwave link in the 2.4 GHZ band which is split into four channels in order to operate multiple cameras, each camera being allocated a frequency channel. A receiver which is connected to a display is adapted to switch to the desired channel. It is a problem with such systems that it is difficult to expand above four cameras.

Accordingly the present invention provides a control transmission method of a driver assistance system for a motor vehicle, the system including at least one camera which is arranged to be removably mounted in a docking station in the vehicle and which incorporates a first communication means arranged to communicate with a second communication means located in the vehicle when the camera is out of the docking station, the docking station and the second communication means being connected to a central microprocessor which is further connected to a display which is located in the interior of the vehicle in a position where it is visible to a driver and further including user input means, the first and the second communication means being provided with a UHF communication unit and a microwave communication unit arranged to transmit signals from the camera to the display by way of a microwave communication channel and to communicate remotely with the camera so as to provide remote control of camera functions by way of a UHF link, said control transmission method comprising the step of :
- selecting the camera requested by the driver;
- determining the quietest channel among the microwave channels by scanning all of them and measuring the received signal strength level on each channel and noting the lowest;
- sending via the UHF link a control command which is regularly re-sent after a first predetermined time interval to the requested camera containing the determined channel to be used;
- receiving video signal transmitted by the selected camera using the microwave link in the determined channel.

The present invention further provides a driver assistance system for a motor vehicle which includes a docking station and at least one camera which is arranged to be removably mounted in the docking station in the vehicle and which includes a first and a second communications means wherein the first communication means is arranged to communicate with the second communication means which is located in the vehicle when the camera is out the docking station, the docking station and the second communication means are connected to a central microprocessor which is further connected to a display which is located in the interior of the vehicle in a position where it is visible to a driver and further including user input means, wherein the camera and the docking station further include a third communication means enabling to exchange data between the microprocessor and the camera when the camera is in the docking station so that the microprocessor will be allowed to remote control the camera.

The present invention still further provides a vehicle including a driver assistance system according to the invention.

The invention will now be described by way of example with reference to the accompanying drawings of which: -
Fig.1 is a schematic block diagram of a driver assistance system incorporated in a motor vehicle in accordance with an embodiment of the present invention;
Fig.2 illustrates the system of fig.1 in a docking station in a vehicle;
Fig.3 is a flow chart illustrating operation of the data transmission between the camera and the vehicle shown in block form in Fig.1; and
Fig.4 is a flow chart illustrating operation of the camera after a receiving command of Fig.3.

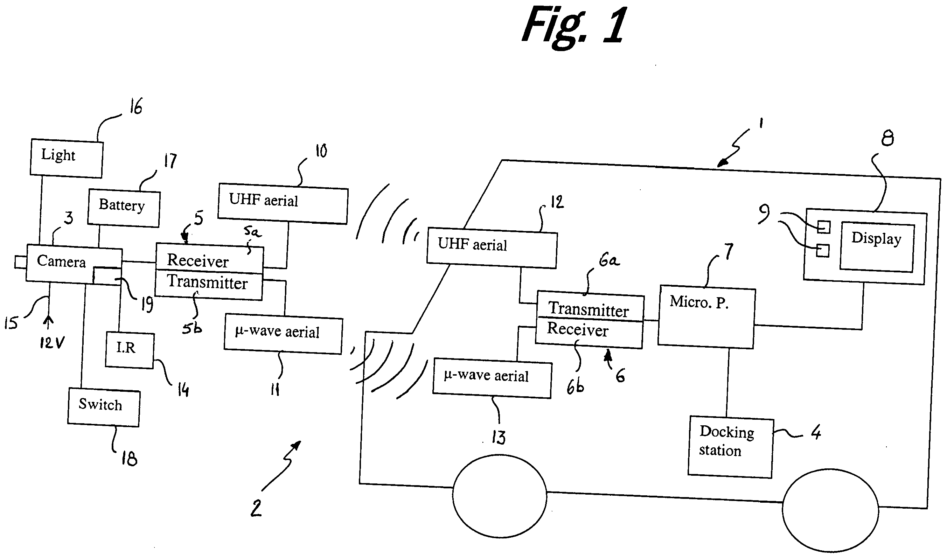

Referring to Fig.1 there is shown a motor vehicle 1 which is equipped with a driver assistance system 2. This system comprises at least one video camera 3 which is arranged to be removably mounted in a docking station 4, the docking station being located in the vehicle 1. The camera 3 incorporates a first communication means 5 enabling it to communicate with a second communication means 6. The second communication means 6 is mounted in the vehicle 1 and is connected to a central microprocessor 7 also mounted in the vehicle. The central microprocessor 7 is further connected to the docking station 4 and to a digital display 8 which is also located in the interior of the vehicle and in a position where it is visible to the driver. The digital display 8 is a conventional device for displaying the field of view of the camera 3 and includes a conventional touch screen 9 mounted on a display surface.

The first communication means 5 and the second communication means 6 are provided with a UHF communication unit (not shown) and a microwave communication unit (not shown) (2.4 GHZ band) arranged to transmit in real time a video signal from the video camera 3 to the digital display 8 by way of microwave communication channel and to communicate remotely with the camera 3 so as to provide remote control of camera functions such as switching the camera 3 on or off by way of a UHF link. Thus, a receiver 5a and a transmitter 5b of the first communication means 5 are provided with respectively a UHF aerial 10 arranged to receive UHF signals and a microwave aerial 11 arranged to transmit microwave signals while a transmitter 6a and a receiver 6b of the second communication means 6 are provided with respectively a UHF aerial 12 arranged to transmit UHF signals and microwave aerial 13 arranged to receive microwave signals.

The video camera 3 is further connected to an infra red communication unit 14, arranged to transmit and receive infra red signals, and to a 12V electrical connector 15 arranged to connect the unit 14 to a DC power supply. The camera 3 further comprises a lighting unit 16 which is attached in the side of a lens of the camera 3, a battery 17, and a switch 18 in the form of a push button enabling it to switch on or off the camera 3. The same push button 18 can be use to switch on or off the lighting unit 16 of the camera 3.

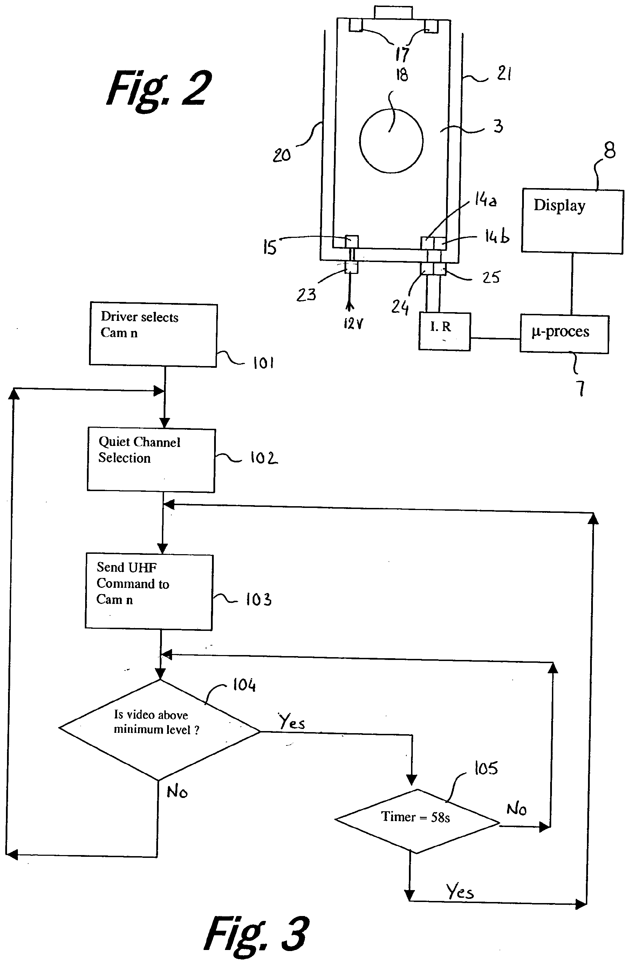

Referring to Fig.2, the docking station 4 comprises two side walls 20, 21 and an end wall 22, the walls being shaped so that the camera 3 can be slid into and out of the docking station 4 from one end. At the closed end of the docking station 4 a 12V electrical supply connector 23 is provided, mounted in the end wall 22 and positioned such that, on sliding the camera 3 into the docking station 4, it will be connected to the 12V connector 15 on the camera 3. It is instructive to note that charging is automatically initiated upon insertion of the camera. Such charging techniques are well-known in the art and will not be discussed in detail herein.

Also mounted in the end wall are an infra red transmitter 24 and receiver 25, positioned so that, with the camera 3 in the docking station 4, they will be adjacent to, but not in contact with, a receiver 14a and transmitter 14b of the infra red unit 14 on the camera 3. The infra red link is used to transmit data between the microprocessor 7 and the camera 3 when it is in the docking station 4, so that information from the camera 3 can be loaded into the microprocessor 7 and displayed to the driver on the screen 8. This enables it to identify and recognize the camera 3 that will be used as will be described in more detail below.

In operation, the camera 3 may be held by a hand or mounted to the vehicle body by means of a magnet (not shown) such that the driver can obtain the view of the vehicle, terrain or trailer in order to make the required manoeuvring task easier and safer. The view from the camera 3 is shown on the display 9 so that it is viewed by the driver in real time. It will be appreciated that more than one camera can be use in different location around the vehicle in order to show different views and then assist the driver to accomplish the required task by selection of the appropriate camera 3.

Operational modes of the control of the video data transmission will be described in detail with reference to the flow charts shown in Fig. 3 to clearly disclose the control transmission method of the present invention. The driver selects the camera that he wants to see the field of view from by operation of a touch screen 9 at step 101. The process determines the quietest microwave channel among four possible channels by scanning all four and measuring the received signal strength level on each channel and noting the lowest at step 102. At step 103 the transmitter 6a under the control of the microprocessor 7 sends via the UHF link a command to the required camera containing an identification number in the form of a unique 32 bit serial number and the channel to be used. Other information such as illumination of the lighting system or image reversal that are function of the camera may be selected by operation of a touch screen 9 by the user and sent at the same time. Then the camera 3 commences the transmission via its transmitter 5b using the microwave link in the required channel.

During this transmission the microprocessor 7 checks at step 104 whether or not the received video signal is above a minimum level. If the answer is "no", the process returns to step 102 to repeat the above-mentioned procedure. If the answer is "yes", the microprocessor 7 discriminates whether or not the lapse of time from a first timer is fifty eight seconds at step 105. If the answer is "no", the process returns at step 104 to check the level of the video signal. If the answer is "yes", the process returns at step 103 where the transmitter 6a retransmits the commands via the UHF link.

It will be appreciated that in the case where a camera 3 is out of control range but still transmitting a receivable video signal and the user selects another camera 3 the channel occupied by the previous camera 3 will be treated as a noisy channel according to the method above-mentioned, and so another channel will be selected.

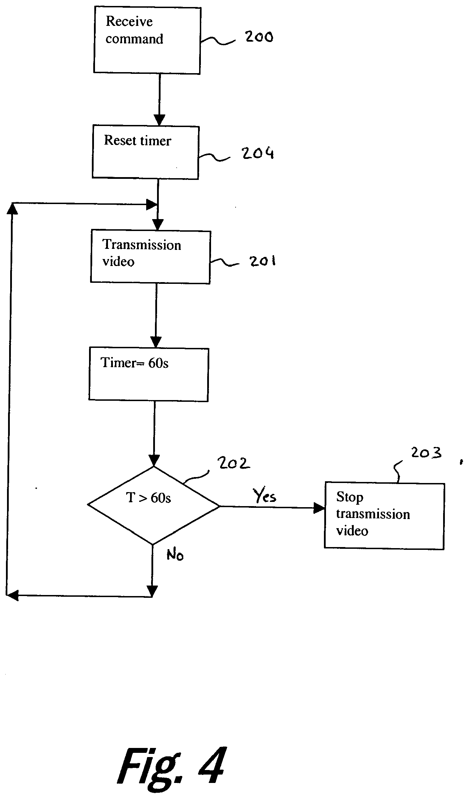

The camera 3 is also provided with a control circuit 19 (see Fig. 1) so that it can minimise the battery drain as shown in Fig.4. When the camera receives a command at step 200 it starts transmitting the video signal to the receiver 6b at step 201. The control circuit 19 discriminates whether or not the lapse of time from a second timer is sixty seconds at step 202. If the answer is "no", the control circuit 19 proceeds to step 201 where it goes on to transmit the video data. If the answer is "yes" the control proceeds at step 203 where the transmission is stopped and the camera turned off. If the control circuit receives a receiving command at step 200 the control circuit proceeds to a step 204 where the control resets the second timer and proceeds to step 201.

This method of controlling the transmission allows a missing command to be updated and allows the camera 3 to shutdown if it fails to receive a predetermined number of updates such for instance where the camera 3 does not turn off because it has gone out of UHF range.

This method also enables the microprocessor to automatically update the transmission channel in the situation where the vehicle may have moved closer to an interferer or another camera 3 may have approached and be using the same channel. The user can also manually update the transmission channel by reselecting the desired camera 3 via the touch screen 9 on the display 8, then the process proceeds at step 102 as above-mentioned.

A camera 3 may be borrowed or shared by other vehicles. For this purpose, the camera 3 which will be shared or borrowed must first be positioned in the docking station 4 of each vehicle in order to load, by infra red transmitter 24 and receiver 25, into the microprocessor 7, the serial number of the camera 3, which is a unique 32 bit code, and displayed to the driver on the screen 8 as a more memorable number such as "cam 3". Thus the view of the camera 3 will be able to be displayed and controlled by each vehicle with which it has been previously associated. In the case where the camera is shared only the first vehicle, which turned it on, will be allowed to turn it off.

## Claims

1. A control transmission method of a driver assistance system for a motor vehicle, the system including at least one camera (3) which is arranged to be removably mounted in a docking station (4) in the vehicle (1) and which incorporates a first communication means (5) arranged to communicate with a second communication means (6) located in the vehicle when the camera (3) is out of the docking station (4), the docking station (4) and the second communication means (6) being connected to a central microprocessor (7) which is further connected to a display (8) which is located in the interior of the vehicle (1) in a position where it is visible to a driver and further including user input means (9), **characterised in that** the first (5) and the second (6) communication means are provided with a UHF communication unit and a microwave communication unit arranged to transmit signals from the camera (3) to the display (8) by way of a microwave communication channel and to communicate remotely with the camera (3) so as to provide remote control of camera functions by way of a UHF link, said control transmission method comprising the step of :
- selecting the camera requested by the driver;
- determining the quietest channel among the microwave channels by scanning all of them and measuring the received signal strength level on each channel and noting the lowest;
- sending via the UHF link a control command which is regularly re-sent after a first predetermined time interval to the requested camera containing the determined channel to be used;
- receiving video signal transmitted by the selected camera using the microwave link in the determined channel.

2. A method according to claim 1 wherein the step of receiving the video signal includes the step of checking the level of the video signal and retransmit the said control command via the UHF link if the said level is above a threshold level.

3. A method according to claim 1 or 2 wherein the step of receiving the video signal further includes the step of allowing the video signal transmission by the selected camera during a second predetermined time interval which is higher than the said first predetermined time interval before shutting down the camera unless a control command enabling to reset the said second predetermined time interval is received.

4. A driver assistance system for a motor vehicle which includes a docking station (4) and at least one camera (3) which is arranged to be removably mounted in the docking station (4) in the vehicle (1) and which includes a first (5) and a second (6) communications means wherein the first communication means (5) is arranged to communicate with the second communication means (6) which is located in the vehicle (1) when the camera (3) is out the docking station (4), the docking station (4) and the second communication means (6) are connected to a central microprocessor (7) which is further connected to a display (8) which is located in the interior of the vehicle (1) in a position where it is visible to a driver and further including user input means (9), **characterised in that** the first (5) and the second (6) communication means are provided with a UHF communication unit and a microwave communication unit arranged to transmit signals from the camera (3) to the display (8) by way of microwave communication channel and to communicate remotely with the camera (3) so as to provide remote control of camera functions by way of UHF link, the transmission of said control comprising the steps of:
- selecting the camera requested by the driver;
- determining the quietest channel among the microwave channels by scanning all of them and measuring the received signal strength level on each channel and noting the lowest;
- sending via the UHF link a control command which is regularly re-sent after a first predetermined time interval to the requested camera containing the determined channel to be used;
- receiving video signal transmitted by the selected camera using the microwave link in the determined channel.

5. A system according to claim 4 in which the first communication means (5) is a transmitter (5b) which is provided with a UHF aerial (10) arranged to receive UHF signals and microwave receiver (5a) with an aerial (11) arranged to transmit microwave signals, and the second communication means (6) is a receiver (6b) which is provided with a UHF aerial (12) arranged to transmit UHF signals and microwave transmitter (6a) with an aerial (13) arranged to receive microwave signals.

6. A system according to any of claims 4 to 5 in which user input means (9) are in the form of touch screen mounted on the display (8) so that it can be operated by the driver to reach by remote control camera functions.

7. A system according to any of claims 4 to 6 wherein the camera (3) comprises a battery (17), lighting unit (16) and switches (18) enabling manually to turn the camera (3) and the lighting unit (16) on or off.

8. A system according to any of claims 4 to 7 wherein the camera (3) further comprises a power connecter (15) arranged to be connected to a power supply (23) when the camera (3) is in the docking station (4).

9. A system according to any of claims 4-8, wherein the camera (3) and the docking station (4) further include a third communication means (24, 25) enabling data exchange between the microprocessor (7) and the camera (3) when the camera (3) is in the docking station (4) so that the microprocessor (7) will be allowed to remote control the camera (3).

10. A vehicle including a system according to any of claims 4 to 9.

## Patentansprüche

1. Steuerübermittlungsverfahren eines Fahrerunterstützungssystems für ein Kraftfahrzeug, wobei das System wenigstens eine Kamera (3) enthält, die angeordnet ist, entfernbar in einer Dockingstation (4) in dem Fahrzeug (1) befestigt zu sein, und welches ein erstes Kommunikationsmittel (5) enthält, angeordnet, mit einem zweiten Kommunikationsmittel (6) zu kommunizieren, welches sich in dem Fahrzeug befindet, wenn die Kamera (3) aus der Dockingstation (4) entnommen ist, wobei die Dockingstation (4) und das zweite Kommunikationsmittel (6) mit einem zentralen Mikroprozessor (7) verbunden sind, der ferner mit einer Anzeige (8) verbunden ist, die sich im Innenraum des Fahrzeugs (1) in einer Position befindet, in der sie für einen Fahrer zu sehen ist, und ferner enthaltend Benutzereingabemittel (9), **dadurch gekennzeichnet, dass** das erste (5) und das zweite (6) Kommunikationsmittel mit einer UHF-Kommunikationseinheit und einer Mikrowellenkommunikationseinheit versehen sind, angeordnet, über einen Mikrowellen-Kommunikationskanal Signale von der Kamera (3) an die Anzeige (8) zu übermitteln und derart aus der Ferne mit der Kamera (3) zu kommunizieren, dass über eine UHF-Verbindung eine Fernsteuerung der Kamerafunktionen bereitgestellt wird, wobei das Steuerübermittlungsverfahren den folgenden Schritt umfasst:
- Auswählen der von dem Fahrer angeforderten Kamera;
- Bestimmen des stillsten unter den Mikrowellenkanälen durch Abtasten aller dieser und Messen der empfangenen Signalstärkestufe auf jedem Kanal und Registrieren der geringsten;
- Senden, über die UHF-Verbindung, eines Steuerbefehls, der nach einem ersten vorbestimmten Zeitintervall regelmäßig erneut gesendet wird, an die angeforderte Kamera, welcher den bestimmten zu nutzenden Kanal enthält;
- Empfangen eines Videosignals, das von der ausgewählten Kamera unter Einsatz der Mikrowellenverbindung auf dem bestimmten Kanal gesendet worden ist.

2. Verfahren nach Anspruch 1, wobei der Schritt des Empfangens des Videosignals Folgendes enthält: den Schritt des Prüfens des Wertes des Videosignals sowie das erneute Übermitteln des Steuerbefehls über die UHF-Verbindung, falls der Wert über einem Schwellenwert liegt.

3. Verfahren nach Anspruch 1 oder 2, wobei der Schritt des Empfangens des Videosignals ferner Folgendes enthält: den Schritt des Ermöglichens der Videosignalübermittlung durch die ausgewählte Kamera während eines zweiten vorgegebenen Zeitintervalls, das höher ist als das erste vorgegebene Zeitintervall, vor dem Abstellen der Kamera, sofern kein Steuerbefehl, der das Rücksetzen des zweiten vorgegebenen Zeitintervalls ermöglicht, empfangen wird.

4. Fahrerunterstützungssystem für ein Kraftfahrzeug, das eine Dockingstation (4) und wenigstens eine Kamera (3) enthält, angeordnet, entfernbar in der Dockingstation (4) in dem Fahrzeug (1) befestigt zu sein, und welches ein erstes (5) und ein zweites (6) Kommunikationsmittel enthält, wobei das erste Kommunikationsmittel (5) angeordnet ist, mit dem zweiten Kommunikationsmittel (6) zu kommunizieren, welches sich in dem Fahrzeug (1) befindet, wenn die Kamera (3) aus der Dockingstation (4) entnommen ist, wobei die Dockingstation (4) und das zweite Kommunikationsmittel (6) mit einem zentralen Mikroprozessor (7) verbunden sind, der ferner mit einer Anzeige (8) verbunden ist, die sich im Innenraum des Fahrzeugs (1) in einer Position befindet, in der sie für einen Fahrer zu sehen ist, und ferner enthaltend Benutzereingabemittel (9), **dadurch gekennzeichnet, dass** das erste (5) und das zweite (6) Kommunikationsmittel mit einer UHF-Kommunikationseinheit und einer Mikrowellenkommunikationseinheit versehen sind, angeordnet, über einen Mikrowellen-Kommunikationskanal Signale von der Kamera (3) an die Anzeige (8) zu übermitteln und derart aus der Ferne mit der Kamera (3) zu kommunizieren, dass sie über die UHF-Verbindung eine Fernsteuerung der Kamerafunktionen bereitstellen, wobei das Übermitteln der Steuerung die folgenden Schritte umfasst:
- Auswählen der von dem Fahrer angeforderten Kamera;
- Bestimmen des stillsten unter den Mikrowellenkanälen durch Abtasten aller dieser und Messen der empfangenen Signalstärkestufe auf jedem Kanal und Registrieren der geringsten;
- Senden, über die UHF-Verbindung, eines Steuerbefehls, der nach einem ersten vorbestimmten Zeitintervall regelmäßig erneut gesendet wird, an die angeforderte Kamera, welcher den bestimmten zu nutzenden Kanal enthält;
- Empfangen eines Videosignals, das von der ausgewählten Kamera unter Einsatz der Mikrowellenverbindung auf dem bestimmten Kanal gesendet worden ist.

5. System nach Anspruch 4, wobei das erste Kommunikationsmittel (5) Folgendes ist:
ein Sender (5b), der mit einer UHF-Antenne (10), angeordnet zum Empfangen von UHF-Signalen, versehen ist, und ein Mikrowellenempfänger (5a) mit einer Antenne (11),
angeordnet zum Senden von Mikrowellensignalen, und das zweite Kommunikationsmittel (6) Folgendes ist: ein Sender (6b), der mit einer UHF-Antenne (12), angeordnet zum Senden von UHF-Signalen, versehen ist, und ein Mikrowellenempfänger (6a) mit einer Antenne (13),
angeordnet zum Empfangen von Mikrowellensignalen.

6. System nach einem der Ansprüche 4 bis 5, wobei Benutzereingabemittel (9) in der Form eines derart auf der Anzeige (8) angebrachten Touchscreens vorliegen, dass dieses von dem Fahrer bedient werden kann, um Kamerafunktionen über Fernbedienung zu erreichen.

7. System nach einem der Ansprüche 4 bis 6, wobei die Kamera (3) eine Batterie (17), eine Beleuchtungseinheit (16) und Schalter (18) umfasst, die es ermöglichen, die Kamera (3) und die Beleuchtungseinheit (16) manuell ein- und auszuschalten.

8. System nach einem der Ansprüche 4 bis 7, wobei die Kamera (3) ferner einen Stromanschluss (15) umfasst, der angeordnet ist, mit einer Stromversorgung (23) verbunden zu sein, wenn die Kamera (3) sich in der Dockingstation (4) befindet.

9. System nach einem der Ansprüche 4-8, wobei die Kamera (3) und die Dockingstation (4) ferner ein drittes Kommunikationsmittel (24, 25) enthalten, das einen Datenaustausch zwischen dem Mikroprozessor (7) und der Kamera (3) ermöglicht, wenn die Kamera (3) in der Dockingstation (4) ist, sodass der Mikroprozessor (7) die Kamera (3) aus der Ferne steuern kann.

10. Fahrzeug, ein System nach einem der Ansprüche 4 bis 9 enthaltend.

## Revendications

1. Procédé de transmission de commande d'un système d'aide à la conduite pour un véhicule motorisé, le système comportant au moins une caméra (3) qui est agencée pour être montée amovible dans une station d'accueil (4) dans le véhicule (1) et qui incorpore un premier moyen de communication (5) agencé pour communiquer avec un deuxième moyen de communication (6) situé dans le véhicule lorsque la caméra (3) est hors de la station d'accueil (4), la station d'accueil (4) et le deuxième moyen de communication (6) étant connectés à un microprocesseur central (7) qui est en outre connecté à un afficheur (8) qui est situé à l'intérieur du véhicule (1) dans une position où il est visible pour un conducteur et comportant en outre des moyens d'entrée utilisateur (9), **caractérisé en ce que** le premier (5) et le deuxième (6) moyen de communication sont pourvus d'une unité de communication UHF et d'une unité de communication hertzienne agencées pour transmettre des signaux de la caméra (3) à l'afficheur (8) au moyen d'un canal de communication hertzienne et pour communiquer à distance avec la caméra (3) de façon à fournir une télécommande de fonctions de caméra au moyen d'une liaison UHF, ledit procédé de transmission de commande comprenant l'étape de :
- sélection de la caméra demandée par le conducteur ;
- détermination du canal le plus calme parmi les canaux hertziens par balayage de la totalité de ceux-ci et la mesure du niveau d'intensité de signal reçu sur chaque canal et la constatation du plus faible ;
- envoi via la liaison UHF d'un ordre de commande qui est renvoyé régulièrement après un premier intervalle de temps prédéterminé à la caméra demandée contenant le canal déterminé à utiliser ;
- réception d'un signal vidéo transmis par la caméra sélectionnée à l'aide de la liaison hertzienne dans le canal déterminé.

2. Procédé selon la revendication 1, dans lequel l'étape de réception du signal vidéo comporte l'étape de vérification du niveau du signal vidéo et de retransmission dudit ordre de commande via la liaison UHF si ledit niveau est au-dessus d'un niveau seuil.

3. Procédé selon la revendication 1 ou 2, dans lequel l'étape de réception du signal vidéo comporte en outre l'étape d'autorisation de la transmission de signal vidéo par la caméra sélectionnée pendant un second intervalle de temps prédéterminé qui est supérieur audit premier intervalle de temps prédéterminé avant d'éteindre la caméra à moins qu'un ordre de commande permettant de réinitialiser ledit second intervalle de temps prédéterminé soit reçu.

4. Système d'aide à la conduite pour un véhicule motorisé qui comporte une station d'accueil (4) et au moins une caméra (3) qui est agencée pour être montée amovible dans la station d'accueil (4) dans le véhicule (1) et qui comporte un premier (5) et un deuxième (6) moyen de communication, dans lequel le premier moyen de communication (5) est agencé pour communiquer avec le deuxième moyen de communication (6) qui est situé dans le véhicule (1) lorsque la caméra (3) est hors de la station d'accueil (4), la station d'accueil (4) et le deuxième moyen de communication (6) sont connectés à un microprocesseur central (7) qui est en outre connecté à un afficheur (8) qui est situé à l'intérieur du véhicule (1) dans une position où il est visible pour un conducteur et comportant en outre des moyens d'entrée utilisateur (9), **caractérisé en ce que** le premier (5) et le deuxième (6) moyen de communication sont pourvus d'une unité de communication UHF et d'une unité de communication hertzienne agencées pour transmettre des signaux de la caméra (3) à l'afficheur (8) au moyen d'un canal de communication hertzien et pour communiquer à distance avec la caméra (3) de façon à fournir une télécommande de fonctions de caméra au moyen d'une liaison UHF, la transmission de ladite commande comprenant les étapes de :
- sélection de la caméra demandée par le conducteur ;
- détermination du canal le plus calme parmi les canaux hertziens par le balayage de la totalité de ceux-ci et la mesure du niveau d'intensité de signal reçu sur chaque canal et la constatation du plus faible ;
- envoi via la liaison UHF d'un ordre de commande qui est renvoyé régulièrement après un premier intervalle de temps prédéterminé à la caméra demandée contenant le canal déterminé à utiliser ;
- réception d'un signal vidéo transmis par la caméra sélectionnée à l'aide de la liaison hertzienne dans le canal déterminé.

5. Système selon la revendication 4, dans lequel le premier moyen de communication (5) est un émetteur (5b) qui est pourvu d'une antenne UHF (10) agencée pour recevoir des signaux UHF et d'un récepteur hertzien (5a) avec une antenne (11) agencée pour transmettre des signaux hertziens, et le deuxième moyen de communication (6) est un récepteur (6b) qui est pourvu d'une antenne UHF (12) agencée pour transmettre des signaux UHF et d'un émetteur hertzien (6a) avec une antenne (13) agencée pour recevoir des signaux hertziens.

6. Système selon l'une quelconque des revendications 4 à 5, dans lequel les moyens d'entrée utilisateur (9) sont sous forme d'un écran tactile monté sur l'afficheur (8) de façon à pouvoir être exploité par le conducteur pour parvenir par télécommande à des fonctions de caméra.

7. Système selon l'une quelconque des revendications 4 à 6, dans lequel la caméra (3) comprend une batterie (17), une unité d'éclairage (16) et des commutateurs (18) permettant manuellement d'activer et de désactiver la caméra (3) et l'unité d'éclairage (16).

8. Système selon l'une quelconque des revendications 4 à 7, dans lequel la caméra (3) comprend en outre un connecteur d'alimentation (15) agencé pour être connecté à un bloc d'alimentation (23) lorsque la caméra (3) est dans la station d'accueil (4).

9. Système selon l'une quelconque des revendications 4 à 8, dans lequel la caméra (3) et la station d'accueil (4) comportent en outre un troisième moyen de communication (24, 25) permettant un échange de données entre le microprocesseur (7) et la caméra (3) lorsque la caméra (3) est dans la station d'accueil (4) de sorte que le microprocesseur (7) sera autorisé à télécommander la caméra (3).

10. Véhicule comportant un système selon l'une quelconque des revendications 4 à 9.
